# EUROPEAN PATENT APPLICATION

(11) **EP 4 462 858 A1**
(43) Date of publication of application: **13.11.2024**
(21) Application number: 24174195.8
(22) Date of filing: 03.05.2024
(51) Int. Cl.: H04W 24/08, H04W 8/24, H04L 41/5067, H04W 76/27

(54) **METHOD AND APPARATUS FOR MEASURING QOE IN RRC INACTIVE MODE AND RRC IDLE MODE IN WIRELESS COMMUNICATION SYSTEM**

(30) Priority: 11.05.2023 KR 20230061298
(71) Applicant: Samsung Electronics Co., Ltd., Suwon-si, Gyeonggi-do 16677 (KR)
(72) Inventor: JEONG, Seungbeom, 16677 Gyeonggi-do (KR); JUNG, Sangyeob, 16677 Gyeonggi-do (KR)
(74) Representative: HGF

(57) **Abstract**

The disclosure relates to a 5G or 6G communication system for supporting a higher data transmission rate.

## Description

### BACKGROUND

### 1. Field

The disclosure relates to a wireless communication system. More specifically, the disclosure relates to a method and apparatus for a terminal of a wireless communication system to measure, store, and report quality of experience (QoE) in a radio resource control (RRC) inactive mode and/or RRC idle mode.

### 2. Description of Related Art

5^{th} generation (5G) mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using CAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### SUMMARY

As discussions on QoE measurement reporting in a wireless communication system increase, there is a growing need for a method for a terminal to more efficiently measure, store, and report QoE in an RRC inactive mode and/or an RRC idle mode.

According to an embodiment of the disclosure, the efficiency of radio resources can be increased, and the processing load of the base station and/or terminal can be reduced. Also, according to an embodiment of the disclosure, a communication service provider can more efficiently improve the QoE of application users.

According to an embodiment of the disclosure, A terminal in a wireless communication system, the terminal comprising:
a transceiver; and
at least one processor coupled with the transceiver and configured to:
transmit, to a base station, a first message comprising at least one of first information indicating whether the terminal supports a quality of experience (QoE) measurement in radio resource control (RRC) idle state or RRC inactive state, or second information indicating memory size for the QoE measurement in the RRC idle state or the RRC inactive state, and
receive, from the base station, a second message comprising configuration information on application layer measurements,
wherein the terminal supports the memory size for the QoE measurement in the RRC idle state or the RRC inactive state more than minimum memory size. According to an embodiment of the disclosure, A base station in a wireless communication system, the base station comprising:
a transceiver; and
at least one processor coupled with the transceiver and configured to:
receive, from a terminal, a first message comprising at least one of first information indicating whether the terminal supports a quality of experience (QoE) measurement in radio resource control (RRC) idle state or RRC inactive state, or second information indicating memory size for the QoE measurement in the RRC idle state or the RRC inactive state, and
transmit, to the terminal, a second message comprising configuration information on application layer measurements,
wherein the terminal supports the memory size for the QoE measurement in the RRC idle state or the RRC inactive state more than minimum memory size.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

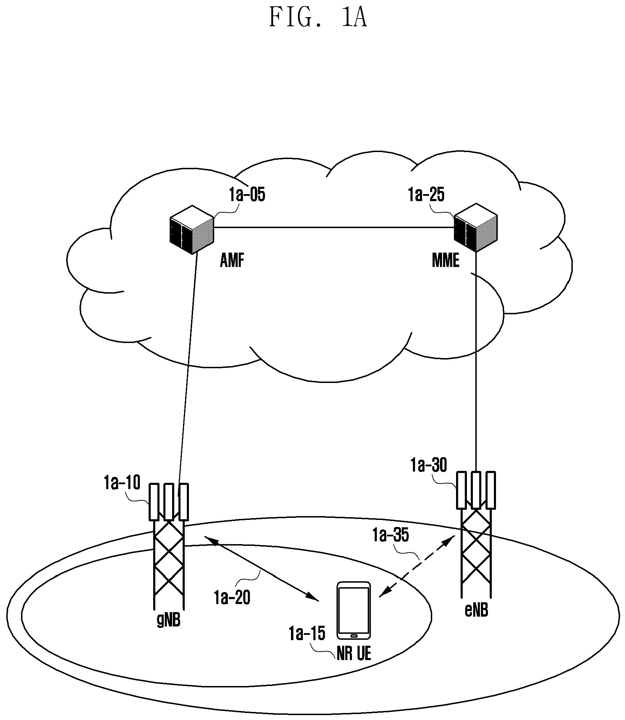

FIG. 1A illustrates a structure of a wireless communication system according to embodiments of the present disclosure;

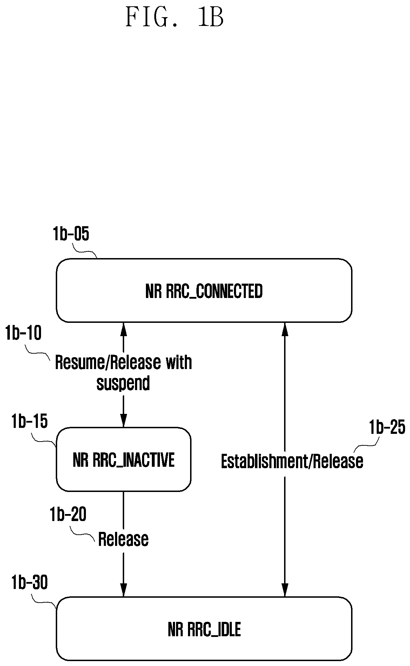

FIG. 1B illustrates an RRC state transition in a wireless communication system according to embodiments of the present disclosure;

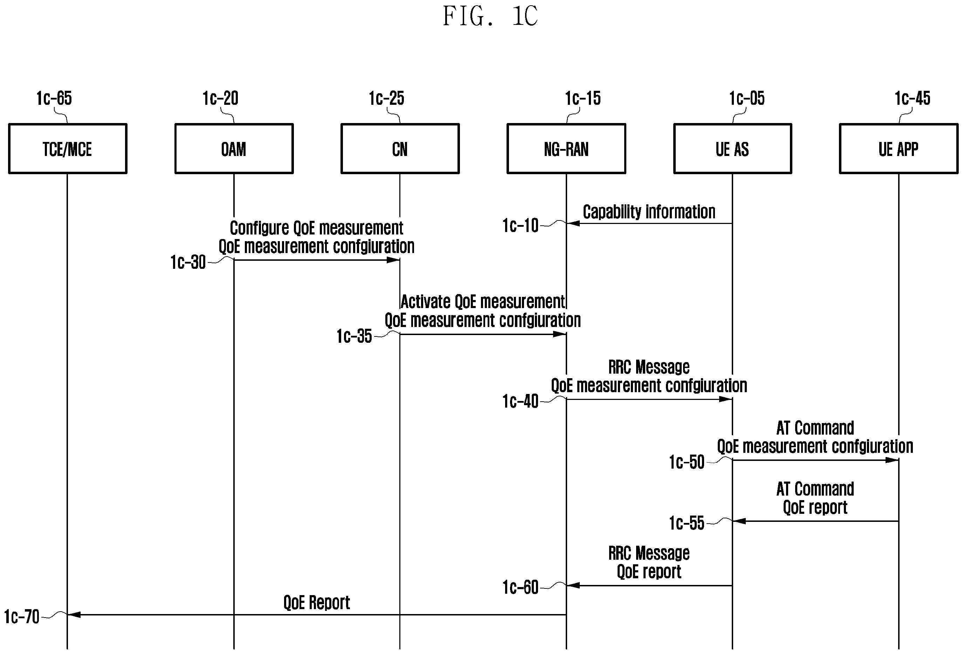

FIG. 1C illustrates a flowchart of a procedure for configuring and/or reporting signaling-based QoE measurement according to embodiments of the present disclosure;

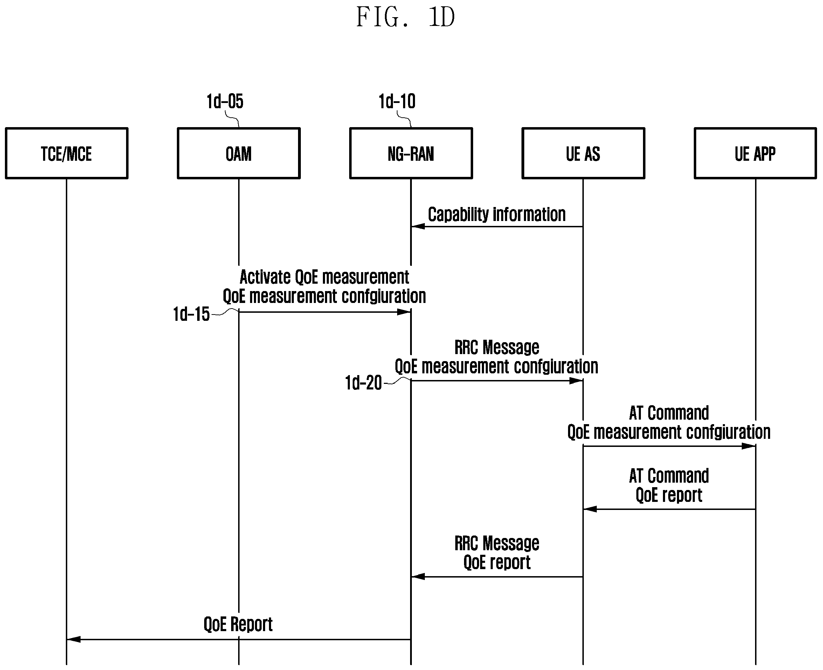

FIG. 1D illustrates a flowchart of a procedure for configuring and/or reporting management-based QoE measurement according to embodiments of the present disclosure;

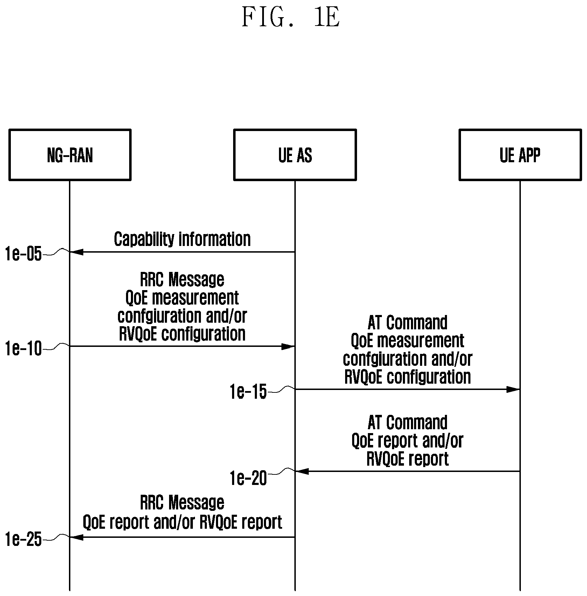

FIG. 1E illustrates a flowchart of method for a configuring and reporting procedure for RAN visible QoE measurement according to embodiments of the present disclosure;

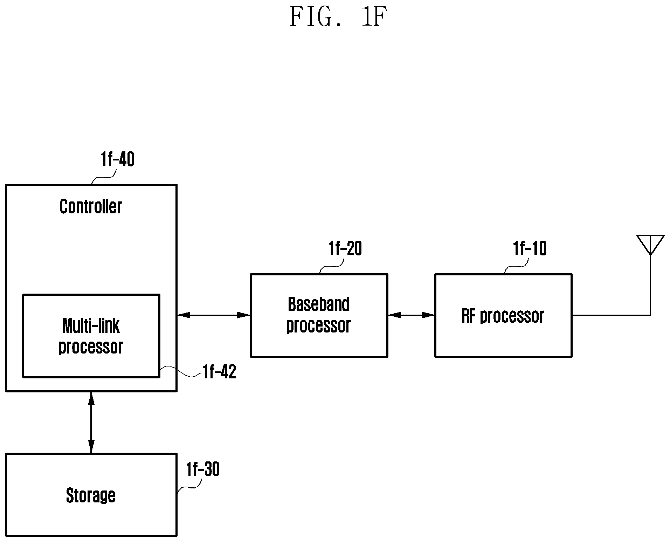

FIG. 1F illustrates a UE according to embodiments of the present disclosure; and

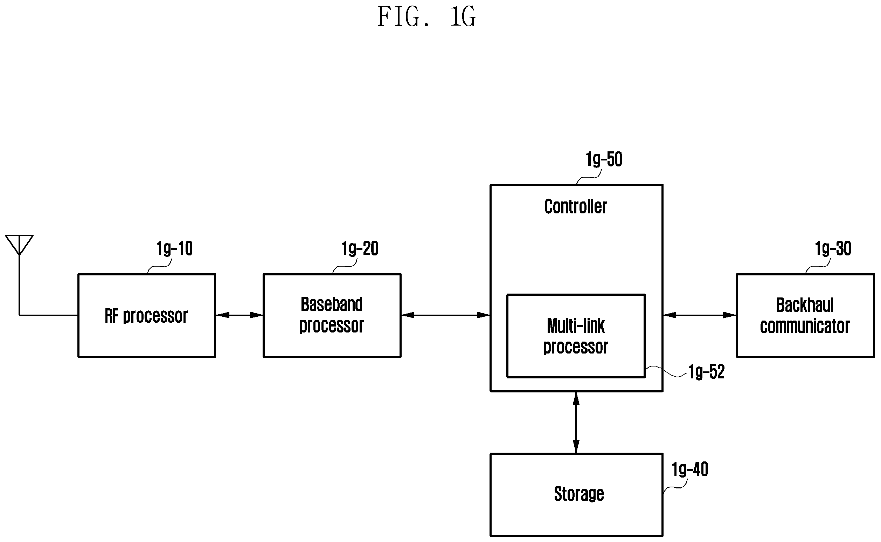

FIG. 1G illustrates a base station according to embodiments of the present disclosure.

### DETAILED DESCRIPTION

FIGS. 1A through 1G, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Terms used in the disclosure are used only for describing specific embodiments, and may not be intended to limit the scope of other embodiments. The singular expression may include the plural expression unless the context clearly dictates otherwise. Terms used herein, including technical or scientific terms, may have the same meanings as commonly understood by one of ordinary skill in the art described in the disclosure. Among the terms used in the disclosure, terms defined in a general dictionary may be interpreted with the same or similar meaning as the meaning in the context of the related art, and unless explicitly defined in the disclosure, it is not to be construed in an ideal or overly formal sense. In some cases, even terms defined in the disclosure cannot be construed to exclude embodiments of the disclosure.

In various embodiments of the disclosure described below, a hardware approach method will be described as an example. However, because various embodiments of the disclosure include technology using both hardware and software, various embodiments of the disclosure do not exclude a software-based approach.

Terms referring to device components (a control unit, a processor, an artificial intelligence (AI) model, an encoder, a decoder, an autoencoder (AE), a neural network (NN) model, etc.) and terms referring to data (signal, feedback, report, reporting, information, parameter, value, bit, codeword, etc.), used in the following description, are examples for convenience of explanation. Accordingly, the disclosure is not limited to the terms described below, and other terms having equivalent technical meaning may be used.

Additionally, the disclosure describes various embodiments using terms used in some communication standards (e.g., 3rd generation partnership project (3GPP)), but this is only an example for explanation. Various embodiments of the disclosure can be easily modified and applied to other communication systems.

Hereinafter, embodiments of the disclosure will be described in detail with reference to the accompanying drawings. It should be noted that in the accompanying drawings, the same element is indicated by the same reference numeral as much as possible. In addition, detailed descriptions of well-known functions and elements that may obscure the subject matter of the disclosure will be omitted. In describing embodiments, descriptions of technical contents that are well known in the technical field to which the disclosure pertains and are not directly related to the disclosure will be omitted. This is to more clearly convey the subject matter of the disclosure without obscuring it by omitting unnecessary description.

For the same reason, some elements are exaggerated, omitted, or schematically illustrated in the accompanying drawings. In addition, the depicted size of each element does not fully reflect the actual size. In the drawings, the same or corresponding elements are assigned the same reference numerals.

The advantages and features of the disclosure and the manner of achieving them will become apparent through embodiments described below with reference to the accompanying drawings. The disclosure may be, however, embodied in many different forms and should not be construed as being limited to the embodiments set forth herein. Rather, these embodiments are provided so that the disclosure will be thorough and complete and will fully convey the scope of the disclosure to those skilled in the art. The disclosure is only defined by the scope of the appended claims. Throughout the specification, the same reference numerals refer to the same elements.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s).

These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s).

The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the term "unit" refers to a software element or a hardware element, such as a field programmable gate array (FPGA) or an application specific integrated circuit (ASIC), which performs a predetermined function. However, the term "unit" does not always have a meaning limited to software or hardware. A "unit" may be constructed either to be stored in an addressable storage medium or to execute one or more processors.

Therefore, a "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and variables.

The functions provided by elements and "units" may be combined into those of a smaller number of elements and "units" or separated into those of a larger number of elements and "units." In addition, the elements and "units" may be implemented to operate one or more central processing units (CPUs) within a device or a secure multimedia card.

In the following description, a term for identifying an access node, a term referring to a network entities, a term referring to messages, a term referring to an interface between network entities, a term referring to various kinds of identification information, and the like are exemplified for convenience of description. Accordingly, the disclosure is not limited to the terms described below, and other terms having equivalent technical meanings may be used.

Hereinafter, for convenience of description, the disclosure will use terms and names defined in the 3rd generation partnership project long term evolution (3GPP LTE) standard or the new radio (NR) standard. However, the disclosure is not limited by such terms and names, and can be equally applied to systems complying with other standards.

Hereinafter, a base station (BS) is a subject that performs resource allocation of a terminal, and may be at least one of a radio access network (RAN) node, a next generation node B (gNode B or gNB), an evolved node B (eNode B or eNB), a Node B, a radio access unit, a base station controller, or a node on a network. In the disclosure, the eNB may be used interchangeably with the gNB for convenience of description. That is, the base station described as the eNB may indicate the gNB.

Hereinafter, a terminal may include a user equipment (UE), a mobile station (MS), a cellular phone, a smart phone, a computer, or a multimedia system capable of performing a communication function. Of course, the terminal is not limited to this example.

In particular, the disclosure is applicable to 3GPP NR (5th generation mobile communication standard). In addition, based on 5G communication technology and IoT (Internet of Things) related technology, the disclosure can be applied to intelligent services (e.g., smart home, smart building, smart city, smart or connected car, healthcare, digital education, retail, security and safety related services, etc.). Additionally, the term terminal may refer to other wireless communication devices as well as mobile phones, NB-IoT devices, and sensors.

Wireless communication systems are evolving from providing a traditional voice-oriented service into wideband wireless communication systems that provide high-speed and high-quality packet data services as in communication standards such as high speed packet access (HSPA), long term evolution (LTE) (or evolved universal terrestrial radio access (E-UTRA)), or LTE-A (advanced) of 3 GPP, high rate packet data (HRPD), or ultra-mobile broadband (UMB) of 3GPP2, and 802.16e of IEEE.

As a typical example of the wideband wireless communication systems, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) transmits data or control signals to a base station (BS) (or eNB, gNB), and the downlink indicates a radio link through which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a communication system subsequent to LTE, may freely reflect various requirements of users, service providers, and the like, services satisfying various requirements may be supported. The services considered in the 5G communication system include enhanced mobile broadband (eMBB) communication, massive machine type communication (mMTC), ultra-reliability low-latency communication (URLLC), and the like.

The eMBB aims at providing a data rate higher than that supported by existing LTE, LTE-A, or LTE-Pro. For example, in the 5G communication system, the eMBB may provide a peak data rate of 20 Gbps in the downlink and a peak data rate of 10 Gbps in the uplink for a single base station. Furthermore, the 5G communication system may provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, the mMTC is being considered to support application services such as the Internet of things (IoT) in the 5G communication system. The mMTC has requirements, such as support of connection of a large number of UEs in a cell, enhancement coverage of UEs, improved battery time, a reduction in the cost of a UE, and the like, in order to effectively provide the IoT. Since the IoT provides communication functions while being provided to various sensors and various devices, it may support a large number of UEs (e.g., 1,000,000 UEs/km2) in a cell. In addition, the UEs supporting the mMTC may require wider coverage than those of other services provided by the 5G communication system because the UEs are likely to be located in a shadow area, such as a basement of a building, which is not covered by the cell due to the nature of the service. The UE supporting the mMTC may be configured to be inexpensive and may require a very long battery lifetime such as 10 to 15 years because it is difficult to frequently replace the battery of the UE.

Lastly, the URLLC, which is a cellular-based mission-critical wireless communication service, may be used for remote control for robots or machinery, industrial automation, unmanned aerial vehicles, remote health care, emergency alert, and the like. Thus, the URLLC may provide communication with ultra-low latency and ultra-high reliability. For example, a service supporting the URLLC may satisfy an air interface latency of less than 0.5 ms, and also requires a packet error rate of 10-5 or less. Therefore, for the services supporting the URLLC, a 5G system may provide a transmit time interval (TTI) shorter than those of other services, and also may require a design for assigning a large number of resources in a frequency band in order to secure reliability of a communication link.

Three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may also be applied to other communication systems through some modifications without significantly departing from the scope of the disclosure.

FIG. 1A illustrates a structure of a wireless communication system according to embodiments of the present disclosure.

With reference to FIG. 1A, as shown, a radio access network of the wireless communication system (new radio, NR) may be composed of a next generation base station (next generation node B, hereinafter gNB) 1a-10 and an access and mobility management function (AMF) 1a-05. A user terminal (new radio user equipment, hereinafter referred to as NR UE or terminal) 1a-15 can access an external network through the gNB 1a-10 and the AMF 1a-05.

In FIG. 1A, the gNB may correspond to an evolved node B (eNB) of the existing LTE system. The gNB can be connected to the NR UE through a wireless channel and can provide superior services than the existing Node B (e.g., eNB) (1a-20). In the wireless communication system, all user traffic can be serviced through a shared channel, so a device that collects status information such as buffer status, available transmission power status, and channel status of UEs and performs scheduling may be needed. This may be performed by the gNB 1a-10. Typically, one gNB can control a plurality of cells. The gNB can have more than the existing maximum bandwidth in order to implement ultra-high data transmission compared to the existing LTE, and further, beamforming technology can be performed using orthogonal frequency division multiplexing (OFDM) as a radio access technology. In addition, an adaptive modulation and coding (AMC) scheme that determines a modulation scheme and a channel coding rate in accordance with the channel status of UE can be applied. The AMF 1a-05 can perform functions such as mobility support, bearer configuration, and quality of service (QoS) configuration.

The AMF is a device that handles various control functions as well as mobility management functions for the UE and can be connected to a plurality of base stations. Additionally, the wireless communication system can be linked to the existing LTE system, and the AMF can be connected to an MME 1a-25 through a network interface. The MME can be connected to an existing base station, eNB 1a-30. The UE that supports LTE-NR dual connectivity can transmit and/or receive data while maintaining connectivity to not only the gNB but also the eNB (1a-35).

FIG. 1B illustrates an RRC state transition in a wireless communication system according to embodiments of the present disclosure.

With reference to FIG. 1B, the wireless communication system may have three radio resource control (RRC) states or RRC modes. A connected mode (RRC_CONNECTED) 1b-05 may be an RRC state in which the UE can transmit and/or receive data. An idle mode (RRC_IDLE) 1b-30 may be an RRC state in which the UE monitors whether paging is transmitted to the UE. Both modes are RRC states that are also applied to the existing LTE system, and the detailed technology may be the same as that of the existing LTE system. In the wireless communication system, an inactive mode (RRC_INACTIVE) 1b-15 may be newly defined. In the inactive mode, UE context can be maintained in the base station and the UE, and radio access network (RAN) based paging can be supported. The features of the new inactive mode may be as follows:
- Cell re-selection mobility;
- CN-NR RAN connection (both C/U-planes) has been established for UE;
- The UE AS context is stored in at least one gNB and the UE;
- Paging is initiated by NR RAN;
- RAN-based notification area is managed by NR RAN; and/or
- NR RAN knows the RAN-based notification area which the UE belongs to.

The new inactive mode can switch to the connected mode or the idle mode using specific procedures. The inactive mode can switch to the connected mode by a resume procedure, and the connected mode can switch to the inactive mode by a release procedure including suspend configuration information (1b-10). In these procedures, one or more RRC messages can be transmitted and/or received between the UE and the base station, which may consist of one or more steps. In addition, the inactive mode can switch to the idle mode through a procedure of release after resume (1b-20). Switching between the connected mode and the idle mode can follow the existing LTE technology. That is, switching between modes can be achieved through an establishment or release procedure (1b-25).

FIG. 1C illustrates a flowchart of a procedure for configuring and/or reporting signaling-based QoE measurement according to embodiments of the present disclosure.

With reference to FIG. 1C, in step 1c-10, a UE or UE's access stratum (AS) 1c-05 can transmit information (e.g., at least one of qoe-Streaming-MeasReport, qoe-MTSI-MeasReport, or qoe-VR-MeasReport) indicating whether measurement of a quality of experience (QoE) is supported by service type (e.g., at least one of streaming, MTSI, or VR), to a base station (or NG-RAN) 1c-15 via a UE capability message (e.g., UECapabilityInformation). Before the UE 1c-05 transmits the UE capability message, the base station 1c-15 may transmit a message (e.g., UECapabilityEnquiry) requesting the UE capability message to the UE 1c-05. In addition, through the UE capability message, the UE 1c-05 may report to the base station 1c-15 by service type (e.g., streaming, VR) whether UE 1c-05 supports QoE measurement (RAN visible QoE measurement) that the base station (or RAN) can read and use (e.g., at least one of ran-VisibleQoE-Streaming-MeasReport or ran-VisibleQoE-VR-MeasReport). In addition, through the UE capability message, the UE 1c-05 may report whether UE 1c-05 supports an uplink RRC message segmentation function (UL RRC segmentation) for the QoE report message (e.g., ul-MeasurementReportAppLayer-Seg). The UE capability message may contain ASN.1 information in Table 1 below and related parameter descriptions in Table 2.

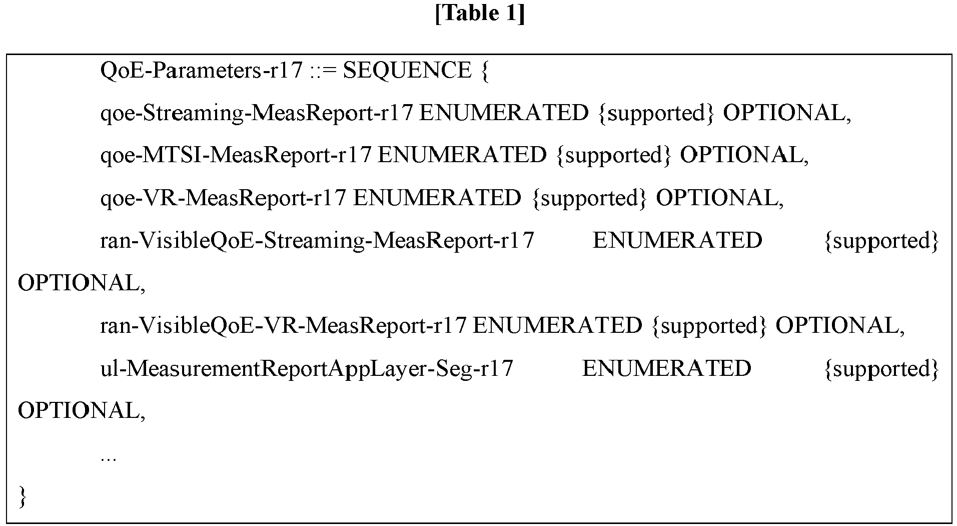

**[Table 2]**

| Definitions for parameters | Per | M | FDD-TDD DIFF | FR1-FR2 DIFF |
|---|---|---|---|---|
| ***qoe-Streaming-MeasReport-r1***7 | UE | No | No | No |
| Indicates whether the UE supports NR QoE Measurement | | | | |
| Collection for streaming services. See TS 26.247 | | | | |

| ***qoe-MTSI-MeasReport-r17*** | UE | No | No | No |
|---|---|---|---|---|
| Indicates whether the UE supports NR QoE Measurement | | | | |
| Collection for MTSI services. See TS 26.114 | | | | |

| *qoe-VR-MeasReport-r17* | UE | No | No | No |
|---|---|---|---|---|
| Indicates whether the UE supports NR QoE Measurement | | | | |
| Collection for VR services. See TS 26.118 | | | | |

| ***ran-VisibleQoE-Streaming-MeasReport-r17*** | UE | No | No | No |
|---|---|---|---|---|
| Indicates whether the UE supports RAN visible QoE | | | | |
| Measurement Collection for streaming services. | | | | |

| ***ran-VisibleQoE-VR-MeasReport-r17*** | UE | No | No | No |
|---|---|---|---|---|
| Indicates whether the UE supports RAN visible QoE | | | | |
| Measurement Collection for VR services. | | | | |

| ***ul-MeasurementReportAppLayer-Seg-r17*** | UE | No | No | No |
|---|---|---|---|---|
| Indicates whether the UE supports RRC segmentation of the MeasurementReportAppLayer message in UL, as specified in TS 38.331 | | | | |

Service types that can be supported in LTE may include streaming and MTSI (multimedia telephony service for IMS (IP multimedia subsystem)). The NR system additionally defines the support for virtual reality (VR) and can further support multimedia broadcast multicast services (MBMS), extended reality (XR), and the like. Of course, it is not limited to the above examples.

According to an embodiment of the disclosure, in step 1c-30, operations administration and maintenance (OAM) 1c-20 can provide QoE measurement configuration information to a core network (CN) 1c-25. In step 1c-35, the CN 1c-25, which has received the QoE measurement configuration information, can activate QoE measurement by transmitting the QoE measurement configuration information to the base station. In step 1c-40, the base station 1c-15, which has received the QoE measurement configuration information, delivers the QoE measurement configuration information to the UE AS 1c-05 through an RRC message (e.g., RRC reconfiguration or RRC resume message). The RRC message may contain an information element (IE) (e.g., APPLayerMeasConfig) as shown in Table 3 below, and related parameter descriptions may be as shown in Tables 4 and 5.

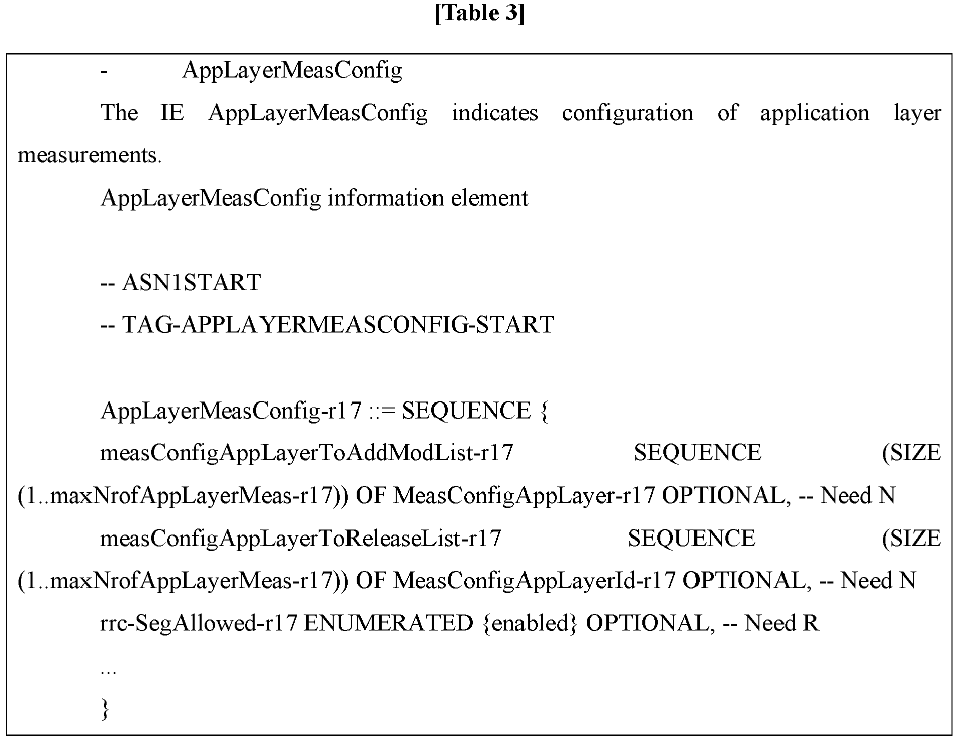

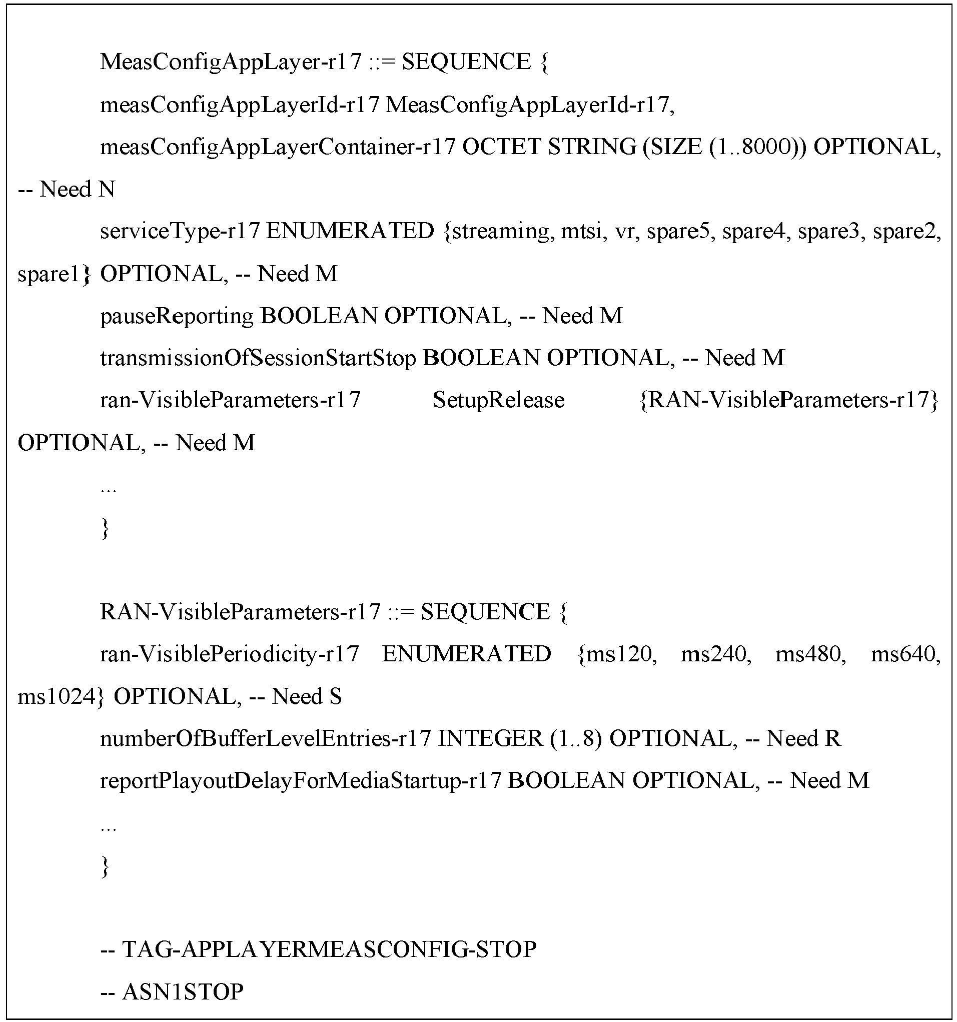

**[Table 4]**

| ***AppLayerMeasConfig field descriptions*** | |
|---|---|
| ***measConfigAppLayerContainer*** | |
| The field contains configuration of application layer measurements. See Annex L (normative) in TS 26.247, clause 16.5 in TS 26.114 and TS 26.118 | |

| ***pauseReporting*** | |
|---|---|
| The field indicates whether the transmission of MeasurementReportAppLayerContainer is paused or not. | |

| ***ran-VisibleParameters*** | |
|---|---|
| The field indicates whether RAN visible application layer measurements may be reported or not. The field is optionally present when serviceType is set to streaming or vr. Otherwise, it is absent. | |

| ***rrc-SegAllowed*** | |
|---|---|
| This field indicates that RRC segmentation of MeasurementReportAppLayer is allowed. It may be present only if the UE supports RRC segmentation of the MeasurementReportAppLayer message in UL. | |

| ***serviceType*** | |
|---|---|
| Indicates the type of application layer measurement. Value streaming indicates Quality of Experience Measurement Collection for streaming services (see TS 26.247), value mtsi indicates Quality of Experience Measurement Collection for MTSI (see TS 26.114), and value vr indicates Quality of Experience Measurement Collection for VR service (see TS 26.118. The network always configures serviceType when application layer measurements are initially configured and at fullConfig. | |

| ***transmissionOfSessionStartStop*** | |
|---|---|
| The field indicates whether the UE may transmit indications when sessions in the application layer start and stop. The UE transmits a session start indication upon configuration of this field if a session already has started in the application layer. | |

**[Table 5]**

| ***RAN-VisibleParameters field descriptions*** | |
|---|---|
| ***numberOfBufferLevelEntries*** | |
| The field contains the maximum number of buffer level entries that can be reported for RAN visible application layer measurements. | |

| ***Ran-VisiblePeriodicity*** | |
|---|---|
| The field indicates the periodicity of RAN visible reporting. Value ms120 indicates 120 ms, value ms240 indicates 240 ms and so on. | |

| ***reportPlayoutDelayForMediaStartup*** | |
|---|---|
| The field indicates whether the UE may report Playout Delay for Media Startup for RAN visible application layer measurements. | |

The operation of the UE AS 1c-05 that has received the QoE measurement configuration information can be expressed as Table 6 below.

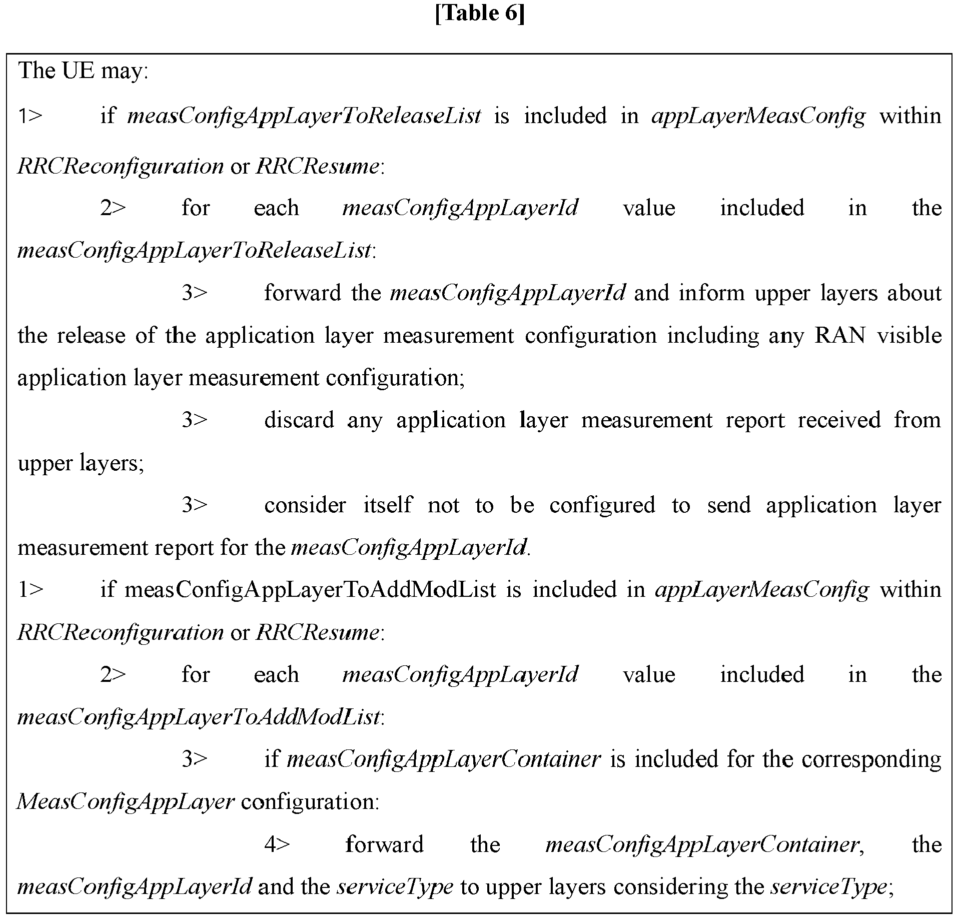

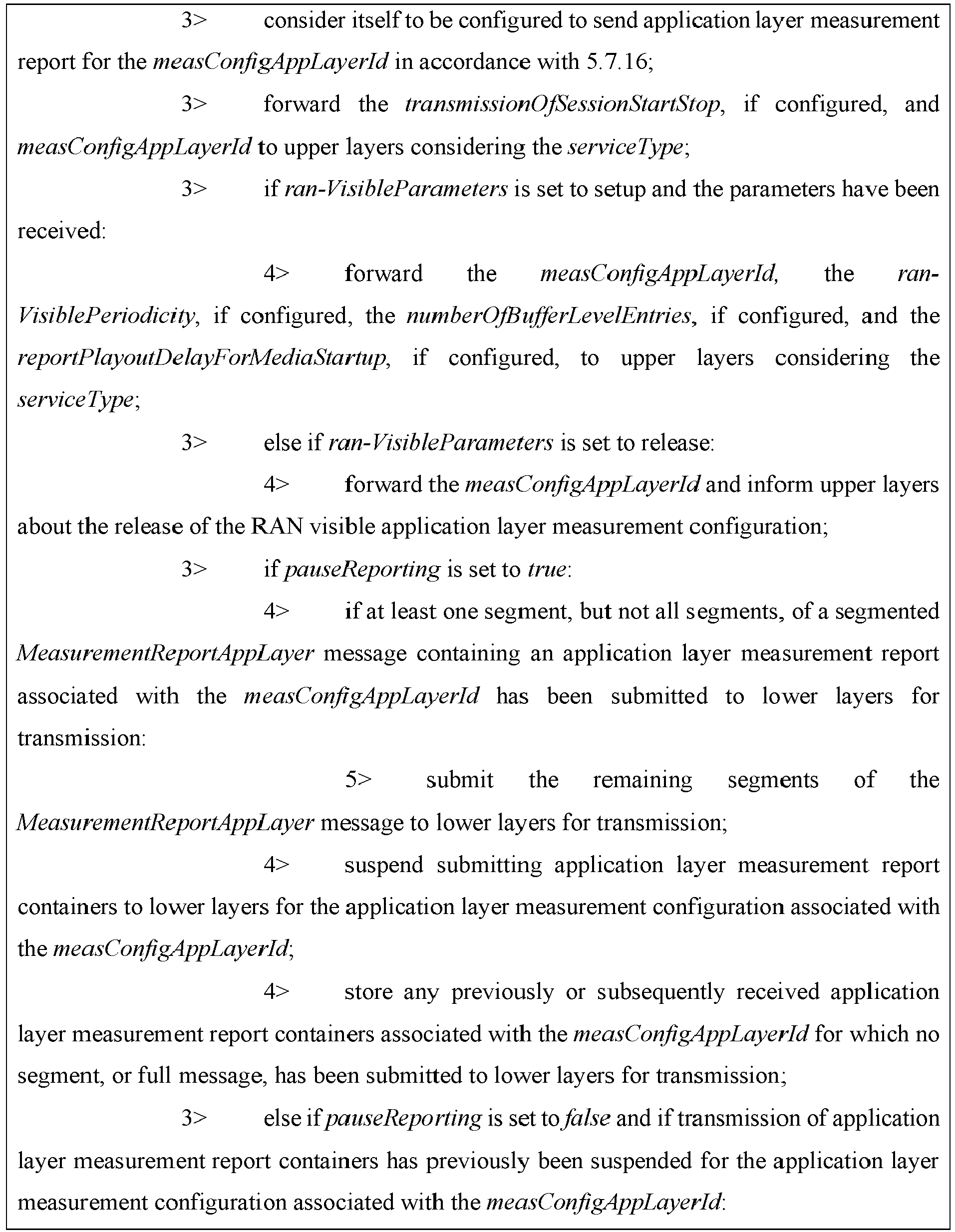

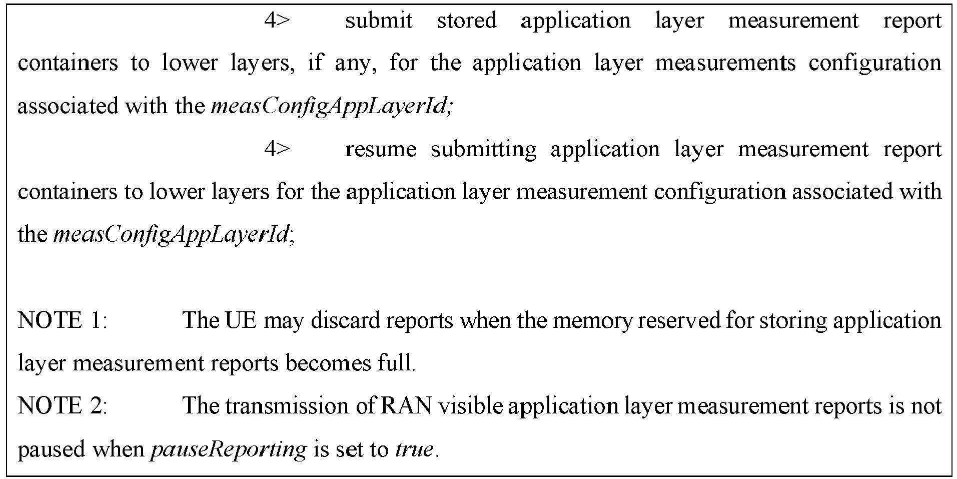

As described above, in the case of QoE measurement configuration contained in measConfigAppLayerToAddModList, in step 1c-50, the UE AS layer 1c-05 can deliver the QoE measurement configuration information to an upper layer or application layer of the UE (UE APP) 1c-45 through an AT Command. In one example, for QoE measurement configuration contained in measConfigAppLayerToAddReleaseList, the UE AS layer 1c-05 can transmit, to the UE APP 1c-45, the AT Command to delete the stored QoE measurement configuration information.

The UE APP 1c-45 can perform the QoE measurement in accordance with the received configuration information. Additionally, in step 1c-55, the UE APP 1c-45 can report the measurement results to the UE AS through the AT command in accordance with the configuration information. In step 1c-60, the UE AS 1c-05 that has received the AT command can report the measurement results to the base station 1c-15 through an RRC message (e.g., MeasurementReportAppLayer message). The UE AS 1c-05 can use SRB4 (signaling radio bearer 4) to report the QoE measurement results. The MeasurementReportAppLayer message may contain ASN.1 information according to Table 7 below. Also, parameters included in the MeasurementReportAppLayer message may refer to the description according to Table 8.

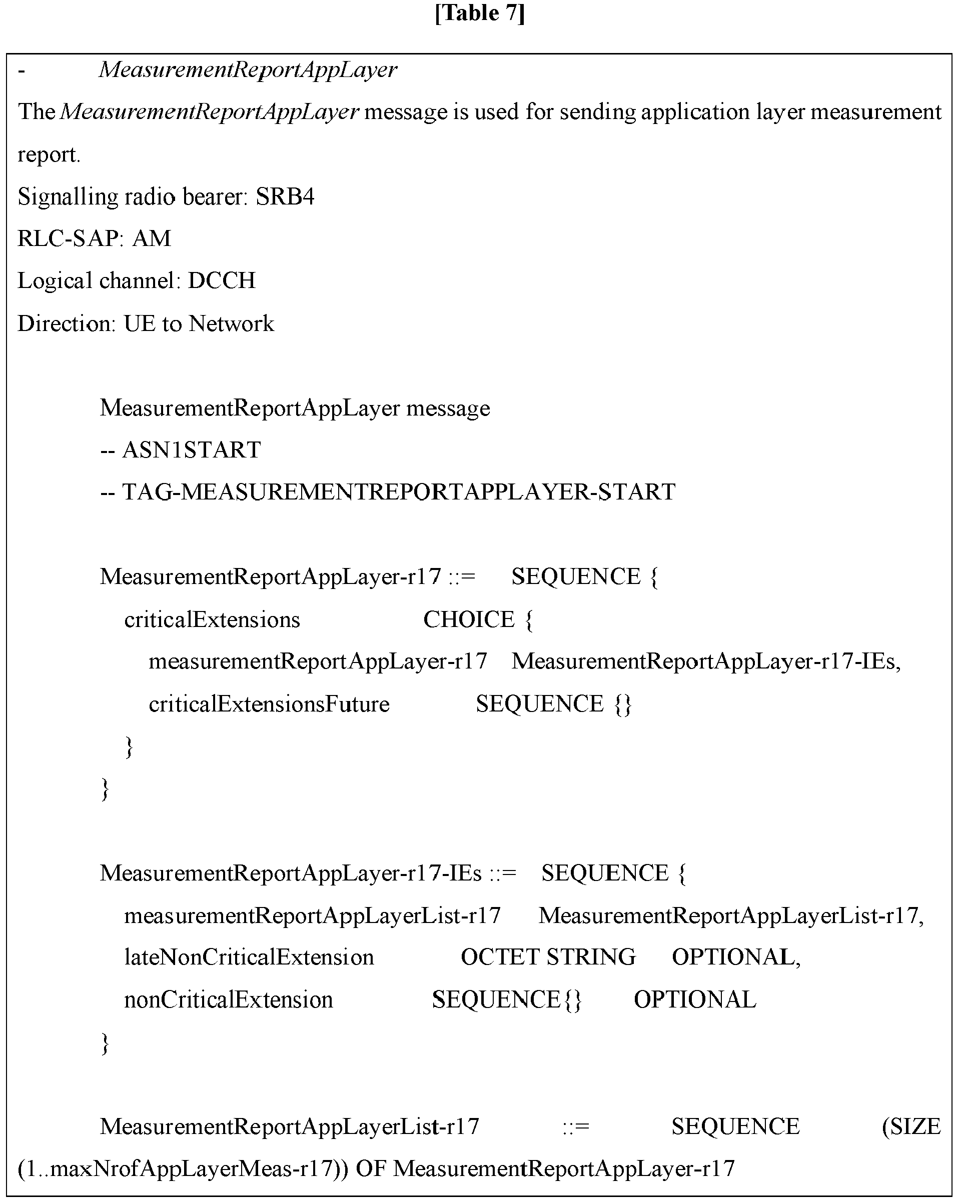

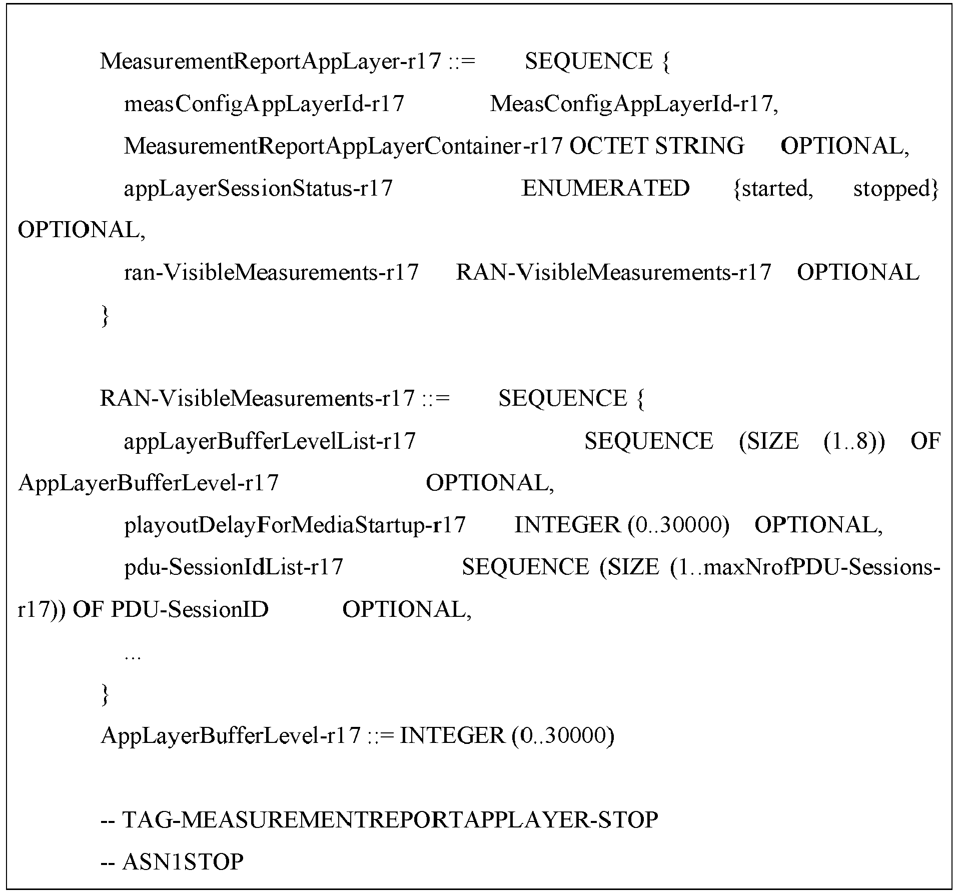

**[Table 8]**

| ***MeasurementReportAppLayer* field descriptions** |
|---|
| ***appLayerBufferLevelList*** |
| The field indicates a list of application layer buffer levels, and each *AppLayerBufferLevel* indicates the application layer buffer level in ms. Value 0 corresponds to 0ms, value 1 corresponds to 10ms, value 2 corresponds to 20 ms and so on. If the buffer level is larger than the maximum value of 30000 (5 minutes), the UE reports 30000. |
| ***appLayerSessionStatus*** |
| Indicates that an application layer measurement session in the application layer starts or ends. |
| ***playoutDelayForMediaStartup*** |
| Indicates the application layer playout delay for media start-up in ms. Value 0 corresponds to 0ms, value 1 corresponds to 1ms, value 2 corresponds to 2 ms and so on. If the playout delay for media start-up is larger than the maximum value of 30000ms, the UE reports 30000. |
| ***MeasurementReportAppLayerContainer*** |
| The field contains application layer measurement report, see Annex L (normative) in TS 26.247 [68], clause 16.5 in TS 26.114 [69] and TS 26.118 [70]. |
| ***pdu-SessionldList*** |
| Contains the identity of the PDU session, or the identities of the PDU sessions, used for application data flows subject to the RAN visible application layer measurements. |

The QoE measurement result reporting procedure of the UE AS 1c-05 can be expressed as Table 9 below.

**[Table 9]**

| |
|---|
| A UE capable of application layer measurement reporting in RRC_CONNECTED may initiate the procedure when configured with application layer measurement, i.e., when *appLayerMeasConfig* and SRB4 have been configured by the network. Upon initiating the procedure, the UE may: |
| ... |
| 3> for each *measConfigAppLayerId*: |

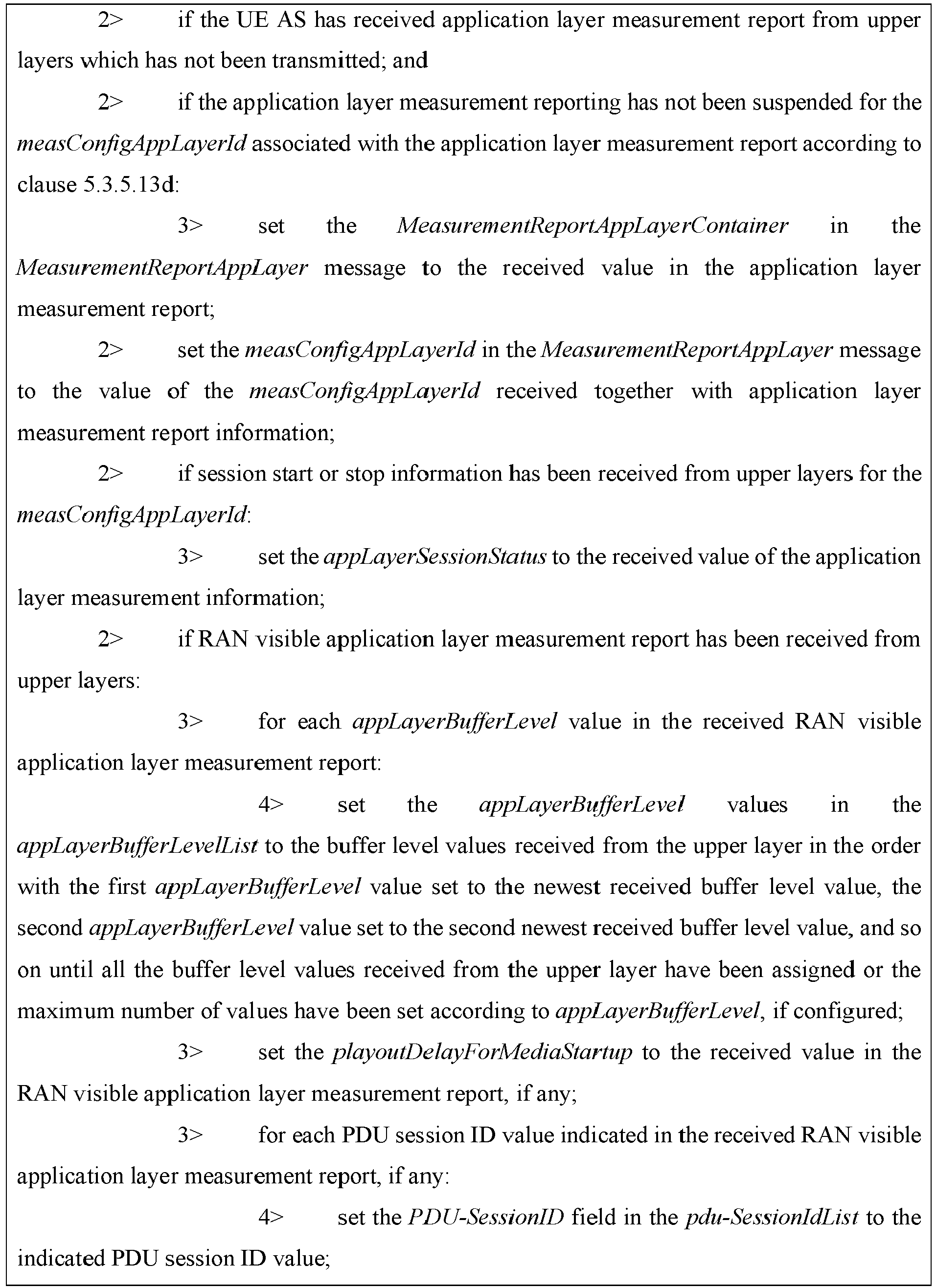

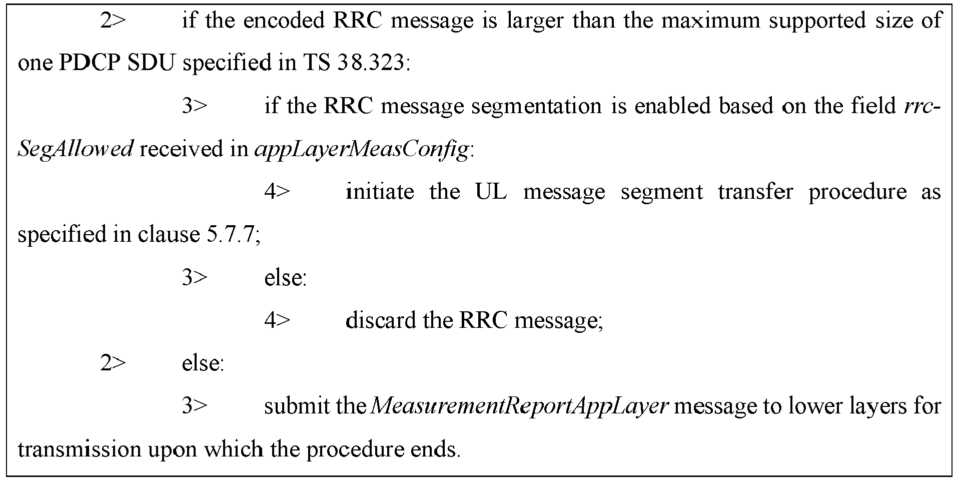

In step 1c-70, the base station 1c-15 may transmit the QoE measurement result report to the final server (TCE or MCE) 1c-65 that collects the measurement report.

FIG. 1D illustrates a flowchart of a procedure for configuring and/or reporting management-based QoE measurement according to embodiments of the present disclosure.

With reference to FIG. 1D, the management-based QoE configuring and/or reporting procedure may be similar to the signaling-based QoE configuring and/or reporting procedure described in FIG. 1C. Therefore, in this drawing, only differences in the management-based scheme can be described, and the other procedures and descriptions can refer to those of FIG. 1C.

In the management-based scheme, QoE measurement can be activated by the OAM 1d-05 directly sending the QoE measurement configuration to the base station 1d-10 in step 1d-15 without going through the CN. The base station that has received the QoE measurement configuration can find a single or multiple UEs that meet a single or multiple conditions (e.g., at least one of area scope, application layer capability, or service type). In step 1d-20, the base station can transmit the QoE measurement configuration to each UE through an RRC message (e.g., RRC reconfiguration message or RRC resume). For the other procedures and message types, refer to the description of FIG. 1C (signaling-based scheme).

FIG. 1E illustrates a flowchart of a method for configuring and reporting procedure for RAN visible QoE measurement according to embodiments of the present disclosure.

With reference to FIG. 1E, as described in FIGS. 1C and 1D, the QoE measurement configuration may be provided by the OAM, the QoE measurement report generated according to the configuration of the OAM may be collected by the TCE/MCE, and the operator may use the QoE measurement report for network optimization.

In this case, the UE may transmit a report on the OAM-based QoE measurement to the base station, and when the base station receives the report on the OAM-based QoE measurement, it may be difficult for the base station to read or understand the measurement report. For example, in a MeasurementReportAppLayer message, a measurement report generated by the application layer of the UE may be contained in measurementReportAppLayerContainer, but because the measurement report is stored in the form of OCTEC STRING, it may be difficult for the base station or the RRC layer of the base station to read or understand the measurement report. To solve this problem, RAN visible QoE (RVQoE) measurement can be defined so that the base station can read the QoE measurement report and use the QoE measurement report for network optimization such as radio resource management.

The RVQoE measurement can be defined limited to a specific service type (e.g., at least one of streaming or VR). In step 1e-05, the UE can first report to the base station whether the RVQoE measurement is supported by service type (e.g., at least one of streaming or VR). At this time, a UE capability message (e.g., UECapabilityInformation message) may be used. For example, for a streaming service, the UE can include or configure the ran-VisibleQoE-Streaming-MeasReport parameter in the UECapabilityInformation message, and for a VR service, the UE can include or configure the ran-VisibleQoE-VR-MeasReport parameter.

In step 1e-10, by the UE including or configuring the above-mentioned parameter(s), the base station can understand whether the UE supports the RVQoE measurement for each service type, and accordingly, the base station can generate the RVQoE measurement configuration and transmit the RVQoE measurement to the UE. At this time, the RVQoE measurement configuration may be delivered together with the OAM-based QoE measurement configuration. The RVQoE measurement configuration may be included in an RRC message (e.g., RRCReconfiguration or RRCResume message). The base station can instruct the UE to set or release the RVQoE measurement through setup or release of the ran-VisibleParameters parameter in the AppLayerMeasConfig IE included in the RRC message. The parameters may include the RAN-VisibleParameters IE, and the base station can provide some or all of the following parameters to the UE through the RAN-VisibleParameters IE:
- RVQoE measurement report periodicity (e.g., ran-VisiblePeriodicity): The UE AS or UE APP can transmit the RVQoE measurement report at each configured period;
- Maximum number of reportable buffer levels (e.g., numberOfBufferLevelEntries): Upon reporting the RVQoE measurement, the UE AS or UE APP may include multiple buffer levels, the number of which may be less than or equal to a configured value; And
- Whether to report playout delay when media starts (e.g., reportPlayoutDelayForMediaStartup): If the value of whether to report the playout delay upon media startup is indicated as "true," the UE AS or UE APP may include the playout delay upon media startup in the RVQoE report and transmit it. If the value of whether to report the playout delay upon media startup is indicated as "false," the UE may not include the playout delay upon media startup in the RVQoE report.

In step 1e-15, the AS layer of the UE can transmit the above-described configuration information to the APP layer of the UE. At this time, the RVQoE measurement configuration may be delivered together with the OAM-based QoE measurement configuration.

In step 1e-20, the APP of the UE can generate an RVQoE measurement report by performing QoE measurement based on the RVQoE measurement configuration information, and transmit the generated RVQoE measurement report to the AS layer of the UE. At this time, the RVQoE measurement report may be delivered together with the OAM-based QoE measurement report.

In step 1e-25, the AS layer of the UE that has received the RVQoE measurement report can deliver the RVQoE measurement report to the base station. At this time, the RVQoE measurement report may be delivered together with the OAM-based QoE measurement report. At this time, the RVQoE measurement report may be transmitted through RAN-VisibleMeasurements IE in the MeasurementReportAppLayer message, and the RAN-VisibleMeasurements IE may include some or all of the following parameters:
- APP layer's buffer level list (e.g., appLayerBufferLevelList): TheAPP layer's buffer level list may include a plurality of buffer levels measured by the UE APP The number included by numberOfBufferLevelEntries in the RVQoE configuration may be limited;
- Playout delay (e.g., playoutDelayForMediaStartup): Playout delay may indicate the playout delay upon media startup in units of ms. In the case where reportPlayoutDelayForMediaStartup is set to "true" in the RVQoE configuration, the UE may include a playout delay parameter; and/or
- PDU session ID list (e.g., pdu-SessionIdList): The PDU session ID list may indicate the PDU session(s) used in an application data flow that is the target of RVQoE measurement. Through the PDU session ID list, the base station can know for which PDU session(s) the RVQoE values (e.g., buffer level and playout delay) were measured, and can optimize resource allocation and scheduling for the corresponding PDU session(s) depending on which RVQoE values (e.g., buffer level and playout delay) are measured for the PDU session(s).

The base station can read the RVQoE report and perform network optimization by utilizing the RVQoE report. For example, the base station can improve the QoE of the UE by allocating relatively more radio resources to the UE experiencing low QoE for a specific service identified based on the PDU session ID.

In one embodiment of the disclosure, to pause (or suspend) the QoE measurement report configured for the UE in a specific situation (e.g., in the case of RAN overload), the base station may instruct the UE to do this. For example, the base station may instruct the UE to pause (or suspend) the QoE measurement report configured for the UE through a pauseReporting indicator in AppLayerMeasConfig. The indicator (e.g., pauseReporting) may be indicated for each QoE configuration ID (e.g., measConfigAppLayerId) to pause each QoE measurement report according to each QoE configuration.

In the case that the UE AS layer receives the pauseReporting indicator set to "true" from the base station, the UE AS layer can pause the QoE measurement report of the QoE configuration ID (e.g., measConfigAppLayerId) associated with the pauseReporting indicator. On the other hand, since the UE APP layer may not be aware of the pause of the QoE measurement report, the UE APP layer may continue to perform the QoE measurement of the corresponding QoE configuration ID (e.g., measConfigAppLayerId) and deliver the measurement result or report to the UE AS layer. However, the UE AS layer may pause transmitting this to the base station and store the measurement result or report received from the APP layer in a memory of the UE AS layer.

To support the pause function of the QoE measurement report instructed by the base station, the minimum memory size (e.g., 64KB) required (mandatorily or optionally) for the UE that supports QoE (e.g., the UE that transmits UE capability including qoe-Streaming-MeasReport-r17 and/or qoe-MTSI-MeasReport-r17 and/or qoe-VR-MeasReport-r17) may be defined. If the minimum memory size (e.g., 64KB) required for the UE supporting QoE is defined, the UE capability report of the UE for the memory size may not be necessary. For example, the minimum memory size required (mandatorily or optionally) for the UE supporting QoE can be defined by an expression such as Table 10 below.

**[Table 10]**

| | |
|---|---|
| AS layer memory size for QoE paused measurement reports | It may be required (or mandatory) to support the minimum AS layer memory size of 64KB for QoE paused measurement reports for UEs which support *qoe-Streaming-MeasReport-r17, qoe-MTSI-MeasReport-r17* or *qoe-VR-MeasReport-r17.* |

The UE (or UE AS) may receive from the base station an indicator to resume QoE measurement reporting. For example, the base station can set the pauseReporting indicator in AppLayerMeasConfig to "false" and transmit the indicator to the UE. The UE may perform a procedure to report the QoE measurement report stored in the memory back to the base station.

Referring to the description of FIGS. 1C and 1D, in the LTE system, the QoE measurement can be supported only in the connected mode (RRC_CONNECTED). On the other hand, the NR system can support the QoE measurement in the inactive mode (RRC_INACTIVE) or the idle mode (RRC_IDLE) for multimedia broadcast multicast services (MBMS) or multicast/broadcast services (MBS). In the future, the NR system can support the QoE measurement in the inactive mode and the idle mode for various service types as well as MBS. In this disclosure, the QoE measurement is described only for the MBS service, but it is not limited to this and can be applied to various service types supportable in the connected mode and/or the inactive mode and/or the idle mode.

In one embodiment of the disclosure, to store the QoE measurement results in the connected mode and/or the inactive mode and/or the idle mode, the UE may use a memory of the AS layer for storing the QoE measurement report paused (by the pauseReporting indicator). For example, the memory can be used to store the QoE results measured in the connected mode and/or the inactive mode and/or the idle mode as well as the paused QoE measurement report, and the two types of QoE measurement result and report (1. the paused QoE measurement report and 2. the QoE result measured in the connected mode and/or the inactive mode and/or the idle mode) may coexist in the memory.

In order to support the pause function of the QoE measurement report indicated by the base station and the QoE measurement (or QoE measurement for MBS service) function in the inactive mode and/or the idle mode, the minimum memory size (e.g., 64KB) required (mandatorily or optionally) for the UE that supports QoE (e.g., the UE transmitting UE capability, including qoe-Streaming-MeasReport-r17 and/or qoe-MTSI-MeasReport-r17 and/or qoe-VR-MeasReport-r17 and/or Inactive/Idle QoE measurement capability indicator (e.g., qoe-IdleInactive-r18) and/or QoE measurement capability indicator for MBS services (e.g., qoe-MBS-MeasReport-r18)) can be defined. If the minimum memory size (e.g., 64KB) required for the UE supporting QoE is defined, the UE capability report of the UE for the memory size may not be necessary. For example, the minimum memory size required (mandatorily or optionally) for the UE supporting QoE may be defined by an expression such as Table 11 below.

**[Table 11]**

| | |
|---|---|
| AS layer memory size for QoE paused measurement reports and QoE measured/logged in RRC_IDLE and RRC_INACTIVE | It may be required (or mandatory) to support the minimum AS layer memory size of 64KB for QoE paused measurement reports and QoE measured/logged reports in RRC_IDLE and RRC_INACTIVE for UEs which support *qoe-Streaming-MeasReport-r17, qoe-MTSI-MeasReport-r17* or *qoe-VR-MeasReport-r17* or *qoe-IdleInactive-r18.* |

In an alternative example, the minimum memory size required (mandatorily or optionally) for the UE supporting QoE may be defined by an expression such as Table 12 below.

**[Table 12]**

| | |
|---|---|
| AS layer memory size for QoE paused measurement reports and QoE measured/logged for MBS | It may be required (or mandatory) to support the minimum AS layer memory size of 64KB for QoE paused measurement reports or QoE measured/logged reports for MBS for UEs which support *qoe-Streaming-MeasReport-r17, qoe-MTSI-MeasReport-r17* or *qoe-VR-MeasReport-r17* or *qoe-MBS-MeasReport-r18.* |

In one embodiment of the disclosure, the UE supporting QoE in the above embodiment may be defined to support the minimum memory size of a specific capacity (e.g., 64KB) or more. Alternatively, it may be, for example, one fixed value from among 128KB, 256KB, 512KB, 1MB, 2MB and the like. This may be a capability (mandatorily or optionally) required for the UE. If it is a mandatory capability for the UE supporting QoE to support the minimum memory size of a specific capacity (e.g., 64KB) or more, the UE capability report may not be necessary. For example, the minimum memory size required (mandatorily or optionally) for the UE supporting QoE may be defined by an expression such as Table 13 below.

**[Table 13]**

| | |
|---|---|
| AS layer memory size for QoE paused measurement reports and QoE measured/logged in RRC_IDLE and RRC_INACTIVE | It may be required (or mandatory) to support the minimum AS layer memory size of 256KB for QoE paused measurement reports and QoE measured/logged reports in RRC_IDLE and RRC _INACTIVE for UEs which support *qoe-Streaming-MeasReport-r17, qoe-MTSI-MeasReport-r17* or *qoe-VR-MeasReport-r17* or *qoe-IdleInactive-r18.* |

In an alternative example, the minimum memory size required (mandatorily or optionally) for the UE supporting QoE may be defined by an expression such as Table 14 below.

**[Table 14]**

| | |
|---|---|
| AS layer memory size for QoE paused measurement reports and QoE measured/logged for MBS | It may be required (or mandatory) to support the minimum AS layer memory size of 256KB for QoE paused measurement reports or QoE measured/logged reports for MBS for UEs which support *qoe-Streaming-MeasReport-r17, qoe-MTSI-MeasReport-r17* or *qoe-VR*-*MeasReport-r17* or *qoe-MBS-MeasReport-r18.* |

In one embodiment of the disclosure, the UE may report to the base station whether the UE supports an available (minimum or maximum) memory size (e.g., for the purpose of storing the QoE measurement results in the inactive mode and/or the idle mode or the QoE measurement results for MBS service). The memory can also be used/shared for the purpose of storing the paused QoE measurement results. For example, through the indicator A in the UE capability message (e.g., UECapabilityInformation), the UE may report whether the UE supports a memory size (e.g., 128KB) of predefined value (minimum or maximum). If the UE transmits the UE capability message including the indicator A to the base station, this may mean that the UE supports a memory size (e.g., 128KB) of predefined value (minimum or maximum). If the UE transmits the UE capability message to the base station without including the indicator A, this may mean that the UE does not support a memory size (e.g., 128KB) of predefined value (minimum or maximum). If the UE transmits the UE capability message to the base station without including the indicator A, this may mean that the UE supports only the minimum memory size (e.g., 64KB) mandatorily required for the UE.

In one embodiment of the disclosure, the UE may report a supportable (minimum or maximum) memory size (e.g., for the purpose of storing the QoE measurement results in the inactive mode and/or the idle mode or the QoE measurement results for MBS service). The memory can also be used/shared for the purpose of storing the paused QoE measurement results. For example, the UE may select its supportable (minimum or maximum) memory size value from among memory size values (e.g., 128KB, 256KB, 512KB, etc.), indicate the selected value through the indicator B in the UE capability message (e.g., UECapabilityInformation), and report the value to the base station. If the UE transmits the UE capability message to the base station by indicating one value through the indicator B, this may mean that the UE supports the memory size (e.g., 128KB) of the corresponding (minimum or maximum) value. If the UE transmits the UE capability message to the base station without including the indicator B, this may mean that the UE supports only the minimum memory size (e.g., 64KB) mandatorily required for the UE.

In one embodiment of the disclosure, the UE may use a memory (e.g., memory 2) used for the purpose of storing QoE measurement results in the inactive mode and/or the idle mode or QoE measurement results for MBS service separately and distinctively from a memory (e.g., memory 1, minimum 64KB) used for storing paused QoE measurement results.

In one embodiment of the disclosure, the UE may define the minimum or maximum memory size for the memory 2 to be supported. For example, it may be one predefined value from among 64KB, 128KB, 256KB, 512KB, 1MB, 2MB, and the like. This may be a capability (mandatorily or optional) required for the UE. If it is a mandatory capability for the UE to support the minimum or maximum memory size with a predefined value for the memory 2, the UE capability report of the UE regarding this may not be necessary. For example, the minimum or maximum memory size for the memory 2 supported by the UE may be defined by an expression such as Table 15 below.

**[Table 15]**

| | |
|---|---|
| AS layer memory size for QoE paused measurement reports | It may be required (or mandatory) to support the minimum AS layer memory size of 64KB for QoE paused measurement reports for UEs which support *qoe-Streaming-MeasReport-r17, qoe-MTSI-MeasReport-r17* or *qoe-VR-MeasReport-r17.* |
| AS layer memory size for QoE measured in RRC_IDLE and RRC_INACTIVE | It may be required (or mandatory) to support the minimum AS layer memory size of 256KB for QoE measured/logged reports in RRC_IDLE and RRC_INACTIVE for UEs which support *qoe-IdleInactive-r18.* |

In an alternative example, the minimum or maximum memory size for the memory 2 supported by the UE may be defined by an expression such as Table 16 below.

**[Table 16]**

| | |
|---|---|
| AS layer memory size for QoE paused measurement reports | It may be required (or mandatory) to support the minimum AS layer memory size of 64KB for QoE paused measurement reports for UEs which support *qoe-Streaming-MeasReport-r17, qoe-MTSI-MeasReport-r17* or *qoe-VR-MeasReport-r17.* |
| AS layer memory size for QoE measured/logged for MBS | It may be required (or mandatory) to support the minimum AS layer memory size of 256KB for QoE measured/logged reports for MBS for UEs which support *qoe-MBS-MeasReport-r18.* |

In one embodiment of the disclosure, the UE may transmit to the base station the UE capability message including the indicator C indicating whether the UE supports the memory 2 having a size of a predefined value (e.g., 25GKB). For example, if the UE supports the memory 2 having a size of a predefined value, the UE may report by including the indicator C in the UECapabilityInformation message or setting the indicator C to "true." If the UE does not support the memory 2 having a size of a predefined value, the UE may report by omitting the indicator C in the UECapabilityInformation message or setting the indicator C to "false." As such, in the case where the indicator C is omitted in the UECapabilityInformation message or the indicator C is set to "false," this may mean that the UE (e.g., the UE supporting QoE measurement in the inactive mode and/or the idle mode or QoE measurement for MBS service) can share/use the memory 1 to store QoE measurement results in the inactive mode and/or the idle mode or QoE measurement results for MBS service. In another embodiment, in the case where the indicator C is omitted in the UECapabilityInformation message or the indicator C is set to "false," this may mean that the UE (e.g., the UE supporting QoE measurement in the inactive mode and/or the idle mode or QoE measurement for MBS service) supports only the mandatorily required minimum memory size (e.g., 64KB) for the memory 2.

In one embodiment of the disclosure, the UE may report a supportable (minimum or maximum) memory size for the memory 2 to the base station. For example, the UE may select its supportable (minimum or maximum) memory size value for the memory 2 from among memory size values (e.g., 64KB, 128KB, 256KB, 512KB, etc.), indicate the selected value through the indicator D in the UE capability message (e.g., UECapabilityInformation), and report the value to the base station. If the UE transmits the UE capability message to the base station by indicating one value through the indicator D, this may mean that, for the memory 2, the UE supports the memory size (e.g., 128KB) of the corresponding (minimum or maximum) value. If the UE (e.g., the UE supporting QoE measurement in the inactive mode and/or the idle mode or QoE measurement for MBS service) transmits the UE capability message to the base station without including the indicator D, this may mean that, for the memory 2, the UE supports only the minimum memory size (e.g., 64KB) mandatorily required for the UE. In another embodiment, if the UE (e.g., the UE supporting QoE measurement in the inactive mode and/or the idle mode or QoE measurement for MBS service) transmits the UE capability message to the base station without including the indicator D, this may mean that the UE can share/use the memory 1 to store QoE measurement results in the inactive mode and/or the idle mode or QoE measurement results for MBS service. In one embodiment of the disclosure, if the UE supports QoE measurement in the inactive mode and/or the idle mode or QoE measurement for MBS (broadcast) service, the UE may transmit the UE capability message (always) including the indicator D. In one embodiment of the disclosure, if the UE does not support QoE measurement in the inactive mode and/or the idle mode or QoE measurement for MBS (broadcast) service, the UE may not (always) include the indicator D in the UE capability message.

In one embodiment of the disclosure, the UE capability information of the UE discussed in the disclosure may be defined or used in the case that the UE supports QoE measurement in the inactive mode and/or the idle mode or QoE measurement for MBS (broadcast) service. If the UE does not support QoE measurement in the inactive mode and/or the idle mode or QoE measurement for MBS (broadcast) service, the corresponding capability may not be defined/used.

In one embodiment of the disclosure, the UE may use/share one memory to store QoE measurement results of two different types (e.g., type 1 and type 2 below):
- Type 1) paused QoE measurement result; and
- Type 2) QoE measurement result in the inactive mode and/or the idle mode or QoE measurement result for MBS service.

For example, the UE may receive QoE configuration 1 (QoE measurement in the connected mode) and QoE configuration 2 (QoE measurement in the connected mode/inactive mode/idle mode) from the base station and perform the QoE measurement in the connected mode. Thereafter, the base station may pause QoE measurement reporting of the UE for QoE configuration 1. While pausing the QoE measurement reporting for QoE configuration 1, the UE AS may store the QoE measurement results for QoE configuration 1 in the memory. Thereafter, the UE may transition to the inactive mode. At this time, the UE may still be storing the measurement results of paused QoE configuration 1 in the memory. Also, the UE may perform the QoE measurement for QoE configuration 2 and store the measurement results in the same memory. That is, the QoE measurement results for type 1 and type 2 may be stored in the same memory at the same time.

In another example, the UE may receive QoE configuration 2 (QoE measurement in the connected mode/inactive mode/idle mode) from the base station. Thereafter, the UE may transition to the inactive or idle mode. In the inactive or idle mode, the UE may perform QoE measurement and store the measurement results in the memory. Thereafter, the UE may transition to the connected mode. However, the UE may not be able to perform QoE measurement reporting in the inactive or idle mode to the connected base station. For example, the UE may not be able to perform QoE measurement reporting in the inactive or idle mode for the base station that does not support QoE measurement reporting in the inactive or idle mode. Therefore, the UE may continue to store the measurement results for QoE configuration 2 in the memory. Thereafter, the base station may configure QoE configuration 1 (QoE measurement in the connected mode) to the UE, and thus the UE may perform QoE measurement. In the case where the base station instructs to pause QoE measurement reporting for QoE configuration 1, the UE may store the QoE measurement report for QoE configuration 1 in the same memory as above. That is, the QoE measurement results for type 1 and type 2 may be stored in the same memory at the same time.

In one embodiment of the disclosure, when the UE uses/shares one memory to store QoE measurement results of two different types (e.g., type 1 and type 2), and when the memory is full, the UE may operate based on at least one or a combination of the following options.
- Option 1. Regardless of the type, the UE may remove (or discard) the oldest QoE measurement result stored in the memory from the memory and store a new QoE measurement result. This option may also be used when the memory is used/shared only with the QoE measurement results of a single type (e.g., type 1 or type 2).
- Option 2-1. The type 1 measurement result may be prioritized over the type 2 measurement result. The type 1 measurement result is the result of measurement in the connected mode, so it may be relatively important data to communication operators. Therefore, the UE may remove (or discard) the type 2 measurement result from the memory and store a new QoE measurement result. If the memory is full of only the type 1 measurement results, the newly measured type 2 measurement result may not be stored and may be immediately removed. A specific priority example may be as follows, and data with a lower priority (higher priority number) may be removed first:
   ▪ Priority 1. Measurement result of type 1 stored relatively recently;
   ▪ Priority 2. Measurement result of type 1 stored relatively long ago;
   ▪ Priority 3. Measurement result of type 2 stored relatively recently; and
   ▪ Priority 4. Measurement result of type 2 stored relatively long ago.
- Option 2-2. The type 2 measurement result may be prioritized over the type 1 measurement result. The type 2 measurement is performed over a relatively long period of time, so operators may require uninterrupted measurement results. Therefore, the UE may remove (or discard) the type 1 measurement result from the memory and store a new QoE measurement result. If the memory is full of only the type 2 measurement results, the newly measured type 1 measurement result may not be stored and may be immediately removed. A specific priority example may be as follows, and data with a lower priority (higher priority number) may be removed first:
   ▪ Priority 1. Measurement result of type 2 stored relatively recently;
   ▪ Priority 2. Measurement result of type 2 stored relatively long ago;
   ▪ Priority 3. Measurement result of type 1 stored relatively recently; and
   ▪ Priority 4. Measurement result of type 1 stored relatively long ago.
- Option 3. The base station may configure priorities for type 1 and type 2 to the UE. If the UE is configured with a high priority of type 1, the UE can perform the operation of Option 2-1. If the UE is configured with a high priority of type 2, I the UE t can perform the operation of Option 2-2.
- Option 4-1. The base station may configure priority per QoE ID (e.g., measConfigAppLayerId) for the UE. For example, if the UE is configured with a priority for QoE ID 1 higher than a priority for QoE ID 2, the UE may determine priorities as follows, regardless of whether the measurement result stored with QoE ID 1 or 2 has type 1 or type 2. In this case, measurement results with lower priority (higher priority number) may be removed first. This option may also be used when the memory is used/shared only with the QoE measurement results of a single type (e.g., type 1 or type 2):
   ▪ Priority 1. Measurement result of QoE ID 1 stored relatively recently;
   ▪ Priority 2. Measurement result of QoE ID 1 stored relatively long ago;
   ▪ Priority 3. Measurement result of QoE ID 2 stored relatively recently; and
   ▪ Priority 4. Measurement result of QoE ID 2 stored relatively long ago.
- Option 4-2. The base station may configure priority per QoE measurement service type (e.g., serviceType) for the UE. For example, if the UE is configured with a priority for service type 1 higher than a priority for service type 2, the UE may determine priorities as follows, regardless of whether the measurement result stored with service type 1 or 2 has type 1 or type 2. In this case, measurement results with lower priority (higher priority number) may be removed first. This option may also be used when the memory is used/shared only with the QoE measurement results of a single type (e.g., type 1 or type 2):
   ▪ Priority 1. Measurement result of service type 1 stored relatively recently;
   ▪ Priority 2. Measurement result of service type 1 stored relatively long ago;
   ▪ Priority 3. Measurement result of service type 2 stored relatively recently; and
   ▪ Priority 4. Measurement result of service type 2 stored relatively long ago.
- Option 5. The base station may configure a memory size (minimum or maximum) that the UE can separately use in a shared memory by type, QoE ID (e.g., measConfigAppLayerId), or service type (e.g., serviceType). Depending on the configuration, the UE may separate/allocate the configured set size in the shared memory for each type, QoE ID, or service type, and store the measurement results separately. If the latest measurement result is generated in each separated memory, but the memory is full, the UE may remove the oldest measurement result.
- Option 6. The UE may prioritize the QoE measurement result for signaling-based QoE measurement configuration over management-based QoE measurement configuration. For example, the UE may define priorities as follows, and data with lower priority (higher priority number) may be removed first. This option may also be used when the memory is used/shared only with the QoE measurement results of a single type (e.g., type 1 or type 2):
   ▪ Priority 1. Signaling-based QoE measurement result stored relatively recently;
   ▪ Priority 2. Signaling-based QoE measurement result stored relatively long ago;
   ▪ Priority 3. Management-based QoE measurement result stored relatively recently; and
   ▪ Priority 4. Management-based QoE measurement result stored relatively long ago.

In one embodiment of the disclosure, support for the maximum memory size rather than the minimum memory size of the UE in the above embodiments may be defined.

In one embodiment of the disclosure, the UE may report to the base station whether the result of QoE measurement (e.g., for MBS broadcast service) in the inactive mode and/or the idle mode is stored. For example, if the UE stores the result of QoE measurement (e.g., QoE measurement for MBS broadcast service) in the inactive mode and/or the idle mode, the UE may include one indicator (e.g., indicator E) in an RRC message (e.g., RRCSetupComplete, RRCResumeComplete, RRCReestablishmentComplete, RRCReconfigurationComplete message) or set the indicator E to "true." If the UE does not store the result of QoE measurement (e.g., QoE measurement for MBS broadcast service) in the inactive mode and/or the idle mode, the UE may omit the indicator E in the RRC message (e.g., RRCSetupComplete or RRCResumeComplete or RRCReestablishmentComplete or RRCReconfigurationComplete message) or set the indicator E to "false."

In one embodiment of the disclosure, the UE may report to the base station whether a QoE measurement report that was not transmitted in the connected mode (e.g., due to a pause indicated by the base station) are stored. If the UE stores a QoE measurement result that was not transmitted in the connected mode, the UE may include one indicator (e.g., indicator F) in an RRC message (e.g., RRCSetupComplete, RRCResumeComplete, RRCReestablishmentComplete, RRCReconfigurationComplete message) or set the indicator F to "true." If the UE does not store the QoE measurement result that was not transmitted in the connected mode, the UE may omit the indicator F in the RRC message (e.g., RRCSetupComplete or RRCResumeComplete or RRCReestablishmentComplete or RRCReconfigurationComplete message) or set the indicator F to "false."

In one embodiment of the disclosure, in the case where 1) the UE stores the result of QoE measurement (e.g., QoE measurement for MBS broadcast service) in the inactive mode and/or the idle mode, or 2) the UE stores a QoE measurement result that was not transmitted in the connected mode (e.g., due to a pause indicated by the base station), the UE may include one indicator (e.g., indicator G) in an RRC message (e.g., RRCSetupComplete, RRCResumeComplete, RRCReestablishmentComplete, RRCReconfigurationComplete message) or set the indicator G to "true." In the case where 1) the UE does not store the result of QoE measurement (e.g., QoE measurement for MBS broadcast service) in the inactive mode and/or the idle mode, and 2) the UE does not store a QoE measurement result that was not transmitted in the connected mode (e.g., due to a pause indicated by the base station), the UE may omit the indicator G in the RRC message (e.g., RRCSetupComplete or RRCResumeComplete or RRCReestablishmentComplete or RRCReconfigurationComplete message) or set the indicator G to "false."

In one embodiment of the disclosure, the UE may not report to the base station whether a QoE measurement report that was not transmitted in the connected mode (e.g., due to a pause indicated by the base station) is stored. However, the UE may report to the base station whether the result of QoE measurement (e.g., QoE measurement for MBS broadcast service) in the inactive mode and/or the idle mode is stored, through an RRC message (e.g., RRCSetupComplete or RRCResumeComplete or RRCReestablishmentComplete or RRCReconfigurationComplete message). If the UE stores 1) a QoE measurement result (first QoE measurement result) that was not transmitted in the connected mode (e.g., due to a pause indicated by the base station), and 2) a QoE measurement result (e.g., the QoE measurement result for MBS broadcasting service) (second QoE measurement result) in the inactive mode and/or the idle mode together in the same memory, the UE can distinguish the first and second QoE measurement results in the same memory. Through this, if the UE identifies that only the first QoE measurement result is stored in the memory without the second QoE measurement result, the UE may not report to the base station whether or not the first QoE measurement result is stored in the memory. If the UE identifies that the second QoE measurement result is stored in the memory, the UE may report to the base station whether or not the second QoE measurement result is stored in the memory.

In one embodiment of the disclosure, if the UE stores a QoE measurement result in the memory and reports this to the base station through an RRC message (e.g., RRCSetupComplete or RRCResumeComplete or RRCReestablishmentComplete or RRCReconfigurationComplete message), the base station may trigger transmission of the corresponding QoE result report to the UE in order to receive the stored QoE measurement result. For example, the base station may configure SRB resources for a QoE measurement result report to the UE, and the UE that has received the SRB resources may transmit the stored QoE measurement report. For example, the UE may transmit a MeasurementReportAppLayer or UEInformationResponse message containing the QoE measurement report to the base station through the configured SRB resources. In another example, the base station may (explicitly) configure an indicator requesting the QoE measurement result report to the UE. For example, the base station may transmit an RRCReconfiguration or UEInformationRequest message containing an indicator requesting the QoE measurement result report to the UE. The UE that has received the indicator may transmit the stored QoE measurement report. For example, the UE may transmit a MeasurementReportAppLayer or UEInformationResponse message containing the QoE measurement report to the base station.

FIG. 1F illustrates a structure of a UE according to embodiments of the present disclosure.

With reference to FIG. 1F, the UE may include a radio frequency (RF) processor 1f-10, a baseband processor 1f-20, a storage 1f-30, and a controller 1f-40.

The RF processor 1f-10 may perform functions for transmitting and/or receiving signals through a wireless channel, such as band conversion and amplification of signals. That is, the RF processor 1f-10 may up-convert a baseband signal provided from the baseband processor 1f-20 into an RF band signal, transmit the RF band signal through an antenna, and downconvert an RF band signal received through the antenna into a baseband signal. For example, the RF processor 1f-10 may include a transmit filter, a receive filter, an amplifier, a mixer, an oscillator, a digital to analog converter (DAC), an analog to digital converter (ADC), and the like. Although only one antenna is shown in the figure, the UE may include a plurality of antennas. Also, the RF processor 1f-10 may include a plurality of RF chains. Furthermore, the RF processor 1f-10 may perform beamforming. For the beamforming, the RF processor 1f-10 may adjust the phase and magnitude of signals transmitted and/or received through a plurality of antennas or antenna elements. Also, the RF processor may perform multiple-input and multiple-output (MIMO) and may receive multiple layers when performing the MIMO operation.

The baseband processor 1f-20 may perform a conversion function between a baseband signal and a bit stream in accordance with the physical layer standard of the system. For example, upon data transmission, the baseband processor 1f-20 may generate complex symbols by encoding and modulating a transmission bit stream. In addition, upon data reception, the baseband processor 1f-20 may restore a received bit stream by demodulating and decoding baseband signals provided from the RF processor 1f-10. For example, in the case of orthogonal frequency division multiplexing (OFDM) scheme, upon data transmission, the baseband processor 1f-20 may generate complex symbols by encoding and modulating a transmission bit stream, map the complex symbols to subcarriers, and configure OFDM symbols through an inverse fast Fourier transform (IFFT) operation and a cyclic prefix (CP) insertion. In addition, upon data reception, the baseband processor 1f-20 may divide baseband signals provided from the RF processor 1f-10 into OFDM symbol units, restore signals mapped to subcarriers through a fast Fourier transform (FFT) operation, and restore a received bit stream through demodulation and decoding.

The baseband processor 1f-20 and the RF processor 1f-10 may transmit and receive signals as described above. Accordingly, the baseband processor 1f-20 and the RF processor 1f-10 may be referred to as a transmitter, a receiver, a transceiver, or a communication unit. Furthermore, at least one of the baseband processor 1f-20 and the RF processor 1f-10 may include a plurality of communication modules to support a plurality of different radio access technologies. In addition, at least one of the baseband processor 1f-20 and the RF processor 1f-10 may include different communication modules to process signals of different frequency bands. For example, the different radio access technologies may include a wireless LAN (e.g., IEEE 802.11), a cellular network (e.g., LTE), and the like. In addition, the different frequency bands may include a super high frequency (SHF) (e.g., 2.NRHz, NRhz) band and a millimeter wave (e.g., 60 GHz) band.

The storage 1f-30 may store a default program for operation of the UE, an application program, and data such as configuration information. Also, the storage 1f-30 may provide the stored data in response to the request of the controller 1f-40.

The controller 1f-40 may control the overall operations of the UE. The controller 1f-40 may control the UE to perform at least one or a combination of methods corresponding to the above-described embodiments. For example, the controller 1f-40 may transmit and/or receive signals through the baseband processor 1f-20 and the RF processor 1f-10. In addition, the controller 1f-40 may write and read data in and from the storage 1f-30. To this end, the controller 1f-40 may include at least one processor. For example, the controller 1f-40 may include a communication processor (CP) for controlling communication and an application processor (AP) for controlling a higher layer such as an application program. Additionally, the controller 1f-40 may further include a multi-connection processor 1f-42 to support multiple connections.

FIG. 1G illustrates a base station according to embodiments of the present disclosure.

With reference to FIG. 1G, the base station may be configured to include an RF processor 1g-10, a baseband processor 1g-20, a backhaul communication unit 1g-30, a storage 1g-40, and a controller 1g-50.

The RF processor 1g-10 may perform functions for transmitting and/or receiving signals through a wireless channel, such as band conversion and amplification of signals. That is, the RF processor 1g-10 may up-convert a baseband signal provided from the baseband processor 1g-20 into an RF band signal, transmit the RF band signal through an antenna, and downconvert an RF band signal received through the antenna into a baseband signal. For example, the RF processor 1g-10 may include a transmit filter, a receive filter, an amplifier, a mixer, an oscillator, a DAC, an ADC, and the like. Although only one antenna is shown in the figure, the first access node may include a plurality of antennas. Also, the RF processor 1g-10 may include a plurality of RF chains. Furthermore, the RF processor 1g-10 may perform beamforming. For the beamforming, the RF processor 1g-10 may adjust the phase and magnitude of signals transmitted and received through a plurality of antennas or antenna elements. The RF processor may perform downward MIMO operation by transmitting one or more layers.

The baseband processor 1g-20 may perform a conversion function between a baseband signal and a bit stream in accordance with the physical layer standard of the first radio access technology. For example, upon data transmission, the baseband processor 1g-20 may generate complex symbols by encoding and modulating a transmission bit stream. In addition, upon data reception, the baseband processor 1g-20 may restore a received bit stream by demodulating and decoding baseband signals provided from the RF processor 1g-10. For example, in the case of complying with the OFDM scheme, upon data transmission, the baseband processor 1g-20 may generate complex symbols by encoding and modulating a transmission bit stream, map the complex symbols to subcarriers, and configure OFDM symbols through an IFFT operation and a CP insertion. In addition, upon data reception, the baseband processor 1g-20 may divide baseband signals provided from the RF processor 1g-10 into OFDM symbol units, restore signals mapped to subcarriers through an FFT operation, and restore a received bit stream through demodulation and decoding. The baseband processor 1g-20 and the RF processor 1g-10 may transmit and receive signals as described above. Accordingly, the baseband processor 1g-20 and the RF processor 1g-10 may be referred to as a transmitter, a receiver, a transceiver, a communication unit, or a wireless communication unit.

The backhaul communication unit 1g-30 may provide an interface for communicating with other nodes in the network. That is, the backhaul communication unit 1g-30 may convert a bit stream transmitted from the main base station to another node, for example, a secondary base station, a core network, etc. into a physical signal, and convert a physical signal received from the other node into a bit stream.

The storage 1g-40 may store a default program for operation of the main base station, an application program, and data such as configuration information. Also, the storage 1g-40 may provide the stored data in response to the request of the controller 1g-50.

The controller 1g-50 may control the overall operations of the main base station. The controller 1g-50 may control the base station to perform at least one or a combination of methods corresponding to the above-described embodiments. For example, the controller 1g-50 may transmit and/or receive signals through the baseband processor 1g-20 and the RF processor 1g-10 or through the backhaul communication unit 1g-30. In addition, the controller 1g-50 may write and read data in and from the storage 1f-40. To this end, the controller 1g-50 may include at least one processor. Additionally, the controller 1g-50 may further include a multi-connection processor 1g-52 to support multiple connections.

The methods according to embodiments set forth in claims or specification of the disclosure may be implemented in the form of hardware, software, or a combination thereof.

When implemented in software, a computer readable storage medium storing one or more programs (software modules) may be provided. One or more programs stored in the computer readable storage medium are configured for execution by one or more processors in an electronic device. One or more programs include instructions for causing an electronic device to execute methods according to embodiments described in claims or specifications of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), other types of optical storage devices, or magnetic cassettes. Alternatively, such programs may be stored in a memory configured with a combination of some or all thereof. Further, each configuration memory may be included in the plural.

Further, the program may be stored in an attachable storage device that may access through a communication network such as Internet, Intranet, a local area network (LAN), a wide area network (WAN), or a storage area network (SAN), or a communication network configured with a combination thereof. Such a storage device may access to a device implementing an embodiment of the disclosure through an external port. Further, a separate storage device on the communication network may access to the device implementing the embodiment of the disclosure.

In the specific embodiments of the disclosure described above, components included in the disclosure are expressed in the singular or the plural according to the presented specific embodiments. However, the singular or plural expression is appropriately selected for the presented situation for convenience of description, and the disclosure is not limited to the singular or plural components, and even if the component is expressed in the plural, the component may be configured with the singular, or even if the component is expressed in the singular, the component may be configured with the plural.

Although specific embodiments have been described in the detailed description of the disclosure, various modifications are possible without departing from the scope of the disclosure. Therefore, the scope of the disclosure should not be limited to the described embodiments and should be defined by claims set forth below as well as equivalents to claims.

Although the present disclosure has been described with various embodiments, various changes and modifications may be suggested to one skilled in the art. It is intended that the present disclosure encompass such changes and modifications as fall within the scope of the appended claims.

## Claims

1. A method performed by a terminal in a wireless communication system, the method comprising:
transmitting, to a base station, a first message comprising at least one of first information indicating whether the terminal supports a quality of experience (QoE) measurement in radio resource control (RRC) idle state or RRC inactive state, or second information indicating memory size for the QoE measurement in the RRC idle state or the RRC inactive state; and
receiving, from the base station, a second message comprising configuration information on application layer measurements;
wherein the terminal supports the memory size for the QoE measurement in the RRC idle state or the RRC inactive state more than minimum memory size.

2. The method of claim 1,
wherein, in case that the terminal supports the minimum memory size for the QoE measurement in the RRC idle state or the RRC inactive state, the first message excludes the second information indicating the memory size for the QoE measurement in the RRC idle state or the RRC inactive state,
wherein the minimum memory size is 64 kilobyte (KB).

3. The method of claim 1, further comprising:
in case that memory for storing an application layer measurement report becomes full, discarding the application layer measurement report based on at least one of information on a priority associated with the application layer measurements, or relative time,
wherein the configuration information on the application layer measurements comprises information on the priority associated with the application layer measurements.

4. The method of claim 3, further comprising:
in case that at least one of the application layer measurement report has the same priority or has no priority, discarding an older application layer measurement report first.

5. A method performed by a base station in a wireless communication system, the method comprising:
receiving, from a terminal, a first message comprising at least one of first information indicating whether the terminal supports a quality of experience (QoE) measurement in radio resource control (RRC) idle state or RRC inactive state, or second information indicating memory size for the QoE measurement in the RRC idle state or the RRC inactive state; and
transmitting, to the terminal, a second message comprising configuration information on application layer measurements;
wherein the terminal supports the memory size for the QoE measurement in the RRC idle state or the RRC inactive state more than minimum memory size.

6. The method of claim 5,
wherein, in case that the terminal supports the minimum memory size for the QoE measurement in the RRC idle state or the RRC inactive state, the first message excludes the second information indicating the memory size for the QoE measurement in the RRC idle state or the RRC inactive state,
wherein the minimum memory size is 64 kilobyte (KB).

7. The method of claim 5,
wherein, in case that memory for storing an application layer measurement report becomes full, the application layer measurement report is discarded based on at least one of information on a priority associated with the application layer measurements, or relative time,
wherein, in case that at least one of the application layer measurement report has the same priority or has no priority, an older application layer measurement report is discarded first,
wherein the configuration information on the application layer measurements comprises information on the priority associated with the application layer measurements.

8. A terminal in a wireless communication system, the terminal comprising:
a transceiver; and
at least one processor coupled with the transceiver and configured to:
transmit, to a base station, a first message comprising at least one of first information indicating whether the terminal supports a quality of experience (QoE) measurement in radio resource control (RRC) idle state or RRC inactive state, or second information indicating memory size for the QoE measurement in the RRC idle state or the RRC inactive state, and
receive, from the base station, a second message comprising configuration information on application layer measurements,
wherein the terminal supports the memory size for the QoE measurement in the RRC idle state or the RRC inactive state more than minimum memory size.

9. The terminal of claim 8,
wherein, in case that the terminal supports the minimum memory size for the QoE measurement in the RRC idle state or the RRC inactive state, the first message excludes the second information indicating the memory size for the QoE measurement in the RRC idle state or the RRC inactive state,
wherein the minimum memory size is 64 kilobyte (KB).

10. The terminal of claim 8, wherein the at least one processor is configured to:
in case that memory for storing an application layer measurement report becomes full, discard the application layer measurement report based on at least one of information on a priority associated with the application layer measurements, or relative time,
wherein the configuration information on the application layer measurements comprises information on the priority associated with the application layer measurements.

11. The terminal of claim 10, wherein the at least one processor is configured to:
in case that at least one of the application layer measurement report has the same priority or has no priority, discard an older application layer measurement report first.

12. A base station in a wireless communication system, the base station comprising:
a transceiver; and
at least one processor coupled with the transceiver and configured to:
receive, from a terminal, a first message comprising at least one of first information indicating whether the terminal supports a quality of experience (QoE) measurement in radio resource control (RRC) idle state or RRC inactive state, or second information indicating memory size for the QoE measurement in the RRC idle state or the RRC inactive state, and
transmit, to the terminal, a second message comprising configuration information on application layer measurements,
wherein the terminal supports the memory size for the QoE measurement in the RRC idle state or the RRC inactive state more than minimum memory size.

13. The base station of claim 12,
wherein, in case that the terminal supports the minimum memory size for the QoE measurement in the RRC idle state or the RRC inactive state, the first message excludes the second information indicating the memory size for the QoE measurement in the RRC idle state or the RRC inactive state,
wherein the minimum memory size is 64 kilobyte (KB).

14. The base station of claim 12,
wherein, in case that memory for storing an application layer measurement report becomes full, the application layer measurement report is discarded based on at least one of information on a priority associated with the application layer measurements, or relative time,
wherein the configuration information on the application layer measurements comprises information on the priority associated with the application layer measurements.

15. The base station of claim 14,
wherein, in case that at least one of the application layer measurement report has the same priority or has no priority, an older application layer measurement report is discarded first.
